# NEUE EUROPÄISCHE PATENTSCHRIFT

(11) **EP 1 173 674 B2**
(45) Veröffentlichungstag und Bekanntmachung des Hinweises auf die Entscheidung über den Einspruch: **17.03.2010**
(45) Hinweis auf die Patenterteilung: 23.03.2005
(21) Anmeldenummer: 00991776.6
(22) Anmeldetag: 23.12.2000
(51) Int. Cl.: F02N 11/08

(54) **ANTRIEBSSTRANG FÜR EIN KRAFTFAHRZEUG**
DRIVE TRAIN FOR A MOTOR VEHICLE
TRANSMISSION POUR VEHICULE MOTORISE

(30) Priorität: 22.02.2000 DE 10007957
(43) Veröffentlichungstag der Anmeldung: 23.01.2002
(73) Patentinhaber: ROBERT BOSCH GMBH, 70442 Stuttgart (DE)
(72) Erfinder: KOELLE, Gerhard, 75446 Wiernsheim (DE); AHNER, Peter, 71032 Boeblingen (DE); TSCHENTSCHER, Harald, 71723 Grossbottwar (DE); ACKERMANN, Manfred, 71570 Oppenweiler (DE)
(86) Internationale Anmeldenummer: PCT/DE2000/004657
(87) Internationale Veröffentlichungsnummer: WO 2001/063122

(56) Entgegenhaltungen:
- EP-A- 0 848 159
- US-A- 4 414 937

## Beschreibung

Die Erfindung betrifft einen Antriebsstrang für ein Kraftfahrzeug, mit den im Oberbegriff des Anspruchs 1 genannten Merkmalen.

### Stand der Technik

Um den Anlassvorgang eines Verbrennungsmotors zu verwirklichen, werden überwiegend elektrische Maschinen verwendet, wobei im Normalfall zum Anlassen des Verbrennungsmotors ein Starterritzel in die Schwungscheibenverzahnung eingespurt wird. Die zum Starten von Verbrennungsmotoren eingesetzten elektrischen Maschinen sind in der Regel Gleich-, Wechsel- oder Drehstrommotoren. Zunehmend an Bedeutung gewinnen jedoch auch elektrische Maschinen in Form von Startergeneratoren, die zum Anlassen des Verbrennungsmotors als Elektromotor und während des Betriebs des Verbrennungsmotors als Generator betrieben werden.

Besonders als Startermotor geeignet ist der elektrische Gleichstrom-Reihenschlussmotor, da dieser das erforderliche hohe Anfangsdrehmoment zur Überwindung der Andrehwiderstände und zur Beschleunigung der Triebwerksmassen entwickelt. Dies ist erforderlich, weil bei jedem Startvorgang erhebliche Widerstände durch die Motorverdichtung, die Kolbenreibung und die Lagerreibung entgegengesetzt werden. Ferner spielen die Bauart sowie die Zylinderanzahl des Motors, das verwendete Schmiermittel und die aktuelle Motortemperatur eine wesentliche Rolle für den Startvorgang des Verbrennungsmotors.

Überwiegend wird das Drehmoment des Starters über ein Ritzel und einen Zahnkranz auf das Schwungrad an der Kurbelwelle des Verbrennungsmotors übertragen. In vereinzelten Fällen werden aber auch Riemen, Keilriemen, Zahnriemen, Ketten oder die Direktübertragung auf die Kurbelwelle gewählt. Der Ritzelstarter ist jedoch wegen der großen Übersetzung zwischen Starterritzel und Zahnkranz der Motorschwungscheibe am besten für einen Startvorgang geeignet, da er auf ein niedriges Drehmoment bei hohen Drehzahlen ausgelegt werden kann. Diese Auslegung ermöglicht es, die Abmessungen und das Gewicht des Starters klein zu halten.

Der Starter muss den Verbrennungsvorgang mit einer Mindestdrehzahl, die Startdrehzahl genannt wird, durchdrehen, damit auch bei ungünstigen Betriebsbedingungen das beim Ottomotor zum Selbstlauf notwendige Luft-Kraftstoff-Gemisch gebildet bzw. beim Dieselmotor die Selbstzündungstemperatur erreicht werden kann. Ferner muss der Starter den Verbrennungsmotor nach den ersten Zündungen beim Hochlaufen auf dessen Mindestselbstdrehzahl unterstützen.

Insbesondere dann, wenn es sich um ein Fahrzeug mit Start-Stopp-Automatik handelt, muss der Verbrennungsmotor häufig gestartet werden.

Erst wenn die Verbrennungsmaschine auf eine zur Leistungsabgabe ausreichende Drehzahl beschleunigt hat, kann die Kupplung geschlossen werden, und das Fahrzeug fährt an.

Wenn der Verbrennungsmotor an einer Ampel abgestellt wurde, ist das erneute Anlassen des Verbrennungsmotors besonders störend, da durch das Starten des Verbrennungsmotors eine Totzeit entsteht, bis sich das Fahrzeug in Bewegung setzt.

Ein weiteres Problem kann beispielsweise dadurch auftreten, dass der Startvorgang bei Start-Stop-Systemen durch die Betätigung des Fahrpedals eingeleitet wird, das heißt, der Fahrer muss zur Betätigung des Fahrpedals den Fuß von der Bremse nehmen, um das Fahrzeug zu starten. Dies führt dazu, dass das Fahrzeug bei einem Halt im Gefälle während der Totzeit zurück rollen kann, falls der Fahrer die Handbremse nicht vorsorglich betätigt hat. Beim Anfahren muss der Fahrer die Handbremse dann im richtigen Moment lösen, damit der Verbrennungsmotor nicht gegen die Bremse arbeitet.

Zur Lösung dieses Problems wurde bereits eine innerhalb des Getriebes angeordnete mechanische Vorrichtung vorgeschlagen, die ein Rollen des Fahrzeugs entgegen der gewünschten Fahrtrichtung, die am eingelegten Gang erkannt wird, verhindert.

### Stand der Technik

Die DE 198 14 402 A1 zeigt drei verschiedene Ausführungsformen, einen Verbrennungsmotor mit wenigstens einer elektrischen Maschine zu starten. Hierzu wird bzw. werden zum Starten der Brennkraftmaschine eine oder mehrere Kupplungen geöffnet bzw. geschlossen, wodurch zumindest eine elektrische Maschine sowohl das Fahrzeug antreibt als auch die Brennkraftmaschine startet.

Die DE 43 23 601 A1 zeigt einen Hybridantrieb, bei dem eine elektrische Maschine mit dem Antriebsstrang verbunden ist. Durch die zwischen der elektrischen Maschine und dem Verbrennungsmotor angeordnete Trennkupplung kann der Verbrennungsmotor in den Antriebsstrang eingekuppelt werden. Hierbei wird die zwischen der elektrischen Maschine und dem Verbrennungsmotor angeordnete Trennkupplung 1 zunächst geöffnet, um das Fahrzeug durch den Elektromotor anzutreiben. Wenn eine geeignete Mindestgeschwindigkeit (z.B. 5-20 km/h) des Fahrzeugs erreicht ist, wird die Trennkupplung dosiert geschlossen, sodass der Verbrennungsmotor auf die Anlassdrehzahl beschleunigt wird.

### Vorteile der Erfindung

Dadurch, dass bei dem erfindungsgemäßen Antriebsstrang für ein Kraftfahrzeug Mittel vorgesehen sind, die die Kupplung beim Start des Verbrennungsmotors derart betätigen können, dass ein erster Teil des beim Starten des Verbrennungsmotors von der elektrischen Maschine erzeugten Drehmoments auf das zumindest eine Fahrzeugantriebsrad und ein zum Starten des Verbrennungsmotors ausreichender zweiter Teil des von der elektrischen Maschine erzeugten Drehmoments auf den Verbrennungsmotor übertragen wird, können die vorstehend genannten Probleme beseitigt werden, ohne dass eine innerhalb des Getriebes angeordnete mechanische Vorrichtung erforderlich ist.

Die Mittel umfassen in einer ersten Ausführungsform der Erfindung eine Steuerungseinrichtung, für die temperatur abhängige Kennfelder für das Startmoment und/oder für das vorwiegend vom Kupplungseinrückweg abhängige Kupplungsmoment verwendet werden.

Die Mittel können auch eine Regelungsvorrichtung umfassen. Die Regelgröße des Regelungskreises kann beispielsweise durch die Kurbelwellendrehzahl gebildet sein. Die Führungsgröße, das heißt die Größe, deren Wert die Aufgabengröße unter festgelegten Bedingungen annehmen soll, kann in diesem Fall beispielsweise die Kurbelwellendrehzahl sein, ab der der Verbrennungsmotor Leistung abgeben kann. Das Stellglied kann beispielsweise durch einen Kupplungsautomaten gebildet sein.

Die Regelungsvorrichtung kann das beim Starten des Verbrennungsmotors von der elektrischen Maschine auf das zumindest eine Fahrzeugantriebsrad übertragene Drehmoment derart regeln, dass Drehungleichförmigkeiten des Verbrennungsmotors beim Start des Verbrennungsmotors von dem zumindest einem Fahrzeugantriebsrad entkoppelt werden.

Diese Entkopplung der Drehungleichförmigkeiten kann zumindest solange erfolgen, bis der Verbrennungsmotor eine Drehzahl erreicht hat, bei der er Leistung abgeben kann. Weiterhin ist es denkbar, dass die Regelungsvorrichtung das beim Starten des Verbrennungsmotors von der elektrischen Maschine auf das zumindest eine Fahrzeugantriebsrad übertragene Drehmoment derart regelt, dass das Fahrzeug im Stillstand gehalten wird, bis der Verbrennungsmotor eine Drehzahl erreicht hat, bei der er Leistung abgeben kann.

Durch eine derartige Regelung würde zwar ein Zurückrollen des Fahrzeugs aufgrund eines Gefälles vermieden, die anfangs erwähnte Totzeit jedoch nicht beseitigt.

Unabhängig von der speziell gewählten Regelung sind gemäß einer weiteren Ausführungsform der Erfindung Sensoren vorgesehen, die einen Ausnahmezustand erfassen, in dem sich das Fahrzeug aufgrund von äußeren Kräften ungewollt in Bewegung setzen würde, weil das beim Starten er elektrischen Maschine auf das zumindest eine Fahrzeugantriebsrad übertragene Drehmoment zu klein ist, um die ungewollte Bewegung des Kraftfahrzeugs zu verhindern.

Die erfindungsgemäßen äußeren Kräfte umfassen beispielsweise die Erdanziehungskraft, die beim Anfahren im Gefälle zu einer ungewollten Bewegung der Kraftfahrzeugs führen kann.

Es ist denkbar, dass der von den Sensoren erfasste Ausnahmezustand dem Fahrer auf irgendeine geeignete Weise angezeigt wird, beispielsweise optisch und/oder akustisch und/oder haptisch.

Gemäß dieser Ausführungsform ist eine Fahrzeugbremse vorgesehen, die beim Auftreten des Ausnahmezustandes automatisch betätigt wird, um die ungewollte Bewegung des Kraftfahrzeuges zu verhindern.

Diese Fahrzeugbremse ist vorzugsweise die ohnehin vorgesehene Feststellbremse oder die an das übliche Bremssystem angeschlossene Bremse.

In diesem Fall ist es vorteilhaft, wenn die Fahrzeugbremse automatisch gelöst wird, wenn der Verbrennungsmotor eine Drehzahl erreicht hat, bei der er Leistung abgeben kann, das heißt, in einem Zustand, in dem sich das Fahrzeug in der gewünschten Richtung in Bewegung setzen kann.

Weiterhin ist es denkbar, dass die Regelungsvorrichtung das beim Starten des Verbrennungsmotors von der elektrischen Maschine auf das zumindest eine Fahrzeugantriebsrad übertragene Drehmoment derart regelt, dass sich das Fahrzeug in Bewegung setzt, bevor der Verbrennungsmotor eine Drehzahl erreicht hat, bei der er Leistung abgeben kann.

Bei dieser Regelungsvariante können sowohl ein ungewolltes Zurückrollen als auch die anfangs erwähnte Totzeit vermieden werden, weil das Kraftfahrzeug bereits durch das von der elektrischen Maschine erzeugte Drehmoment in Bewegung setzen kann.

Die erfindungsgemäß vorgesehenen Mittel umfassen vorzugsweise einen Kuoplungsautomaten, der die Kupplung betätigt.

In diesem Fall kann die Regelungsvorrichtung den Kupplungsautomaten ansteuern.

Die durch die vorliegende Erfindung erzielten Vorteile wirken sich insbesondere dann aus, wenn es sich um ein Kraftfahrzeug handelt, bei dem eine Start-Stopp-Automatik vorgesehen ist, die den Verbrennungsmotor bei einem Stillstand des Fahrzeugs, beispielsweise an einer roten Ampel, abstellen und zur Weiterfahrt wieder starten kann.

Es kann vorteilhaft sein, dass nur beim Start-Stop-Betrieb des Fahrzeugs, nicht jedoch beim bezogen auf die Fahrt ersten Startvorgang, der erste Teil des beim Starten von der elektrischen Maschine erzeugten Drehmoments auf das zumindest eine Antriebsrad übertragen wird.

Die elektrische Maschine kann entweder ein (ausschließlicher) Starter oder ein sogenannter Startergenerator sein, der beim Start des Verbrennungsmotors als Elektromotor und bei laufendem Verbrennungsmotor als Generator betrieben wird.

### Zeichnungen

Die Erfindung wird nachfolgend anhand der zugehörigen Zeichnungen näher erläutert.

Es zeigen:
- Figur 1: eine prinzipielle Anordnung einer Ausführungsform des erfindungsgemäßen Antriebsstranges;
- Figur 2: den Zusammenhang zwischen Kurbelwellendrehzahl, Fahrzeuggeschwindigkeit und zurückgelegtem Weg, für ein Fahrzeug, das einen herkömmlichen Antriebsstrang aufweist; und
- Figur 3: den Zusammenhang zwischen Kurbelwellendrehzahl, Fahrzeuggeschwindigkeit und zurückgelegtem weg, für ein Fahrzeug, das mit einem erfindungsgemäßen Antriebsstrang ausgestattet ist.

### Beschreibung des Ausführungsbeispiels

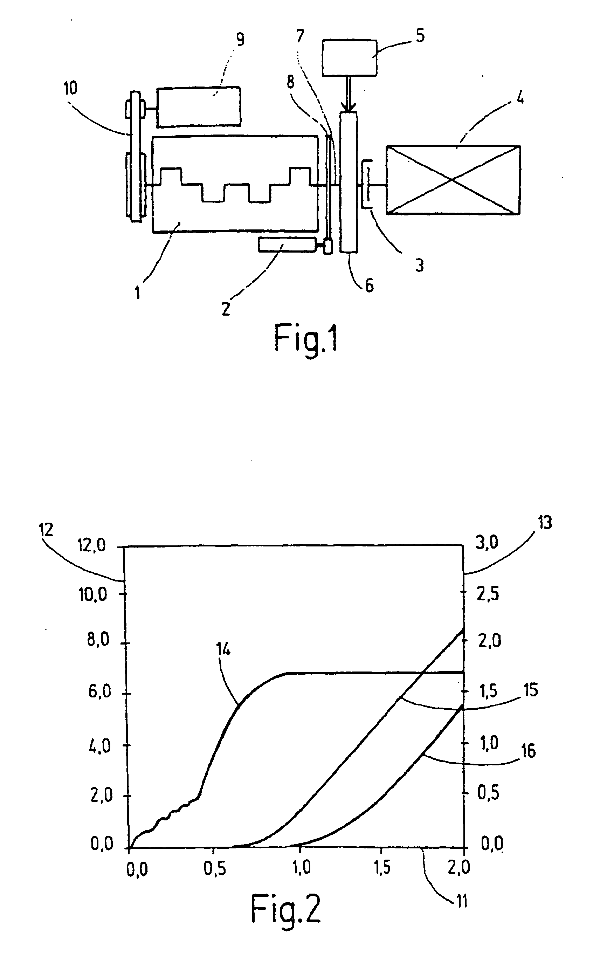

In Figur 1 ist eine Ausführungsform eines Antriebsstranges für ein Kraftfahrzeug gemäß der vorliegenden Erfindung dargestellt. Der Antriebsstrang umfasst einen Verbrennungsmotor 1, dessen Abtrieb durch eine Kurbelwelle 7 gebildet ist. Auf der Kurbelwelle 7 ist eine Schwungscheibe 8 angeordnet, die eine Außenverzahnung aufweist.

In diese Außenverzahnung greift, zumindest beim Startvorgang, das Starterritzel eines Starters 2 ein.

Weiterhin ist eine hier nicht näher interessierende Lichtmaschine 9 angedeutet, die über einen Keilriemen 10 ebenfalls mit der Kurbelwelle 7 verbunden ist.

Der dargestellte Antriebsstrang umfasst weiterhin eine Kupplung 3, die zwischen dem Verbrennungsmotor 1 und einem Getriebe 4 angeordnet ist, über das ein durch den Verbrennungsmotor erzeugtes Drehmoment auf zumindest ein nicht dargestelltes Fahrzeugantriebsrad übertragen werden kann. Die Mittel, die die Kupplung 3 beim Start des Verbrennungsmotors 1 derart betätigen können, dass ein erster Teil des beim Starten des Verbrennungsmotors von der elektrischen Maschine (in Form eines Starters 2) erzeugten Drehmoments auf das zumindest eine Fahrzeugantriebsrad und ein zum Starten des Verbrennungsmotors 1 ausreichender zweiter Teil des vom Starter 2 erzeugten Drehmoments auf den Verbrennungsmotor 1 übertragen wird, sind im dargestellten Fall durch eine Regelungsvorrichtung 5 und einen Kupplungsautomaten 6 gebildet.

Im dargestellten Fall ist die Startanlage des Verbrennungsmotors 1 derart dimensioniert, dass auch bei extrem tiefen Temperaturen ein sicherer Start möglich ist.

Wenn eine Start-Stopp-Automatik vorgesehen ist, erfolgt der Wiederholstart bei betriebswarmem Verbrennungsmotor 1, der wesentlich weniger Startleistung erfordert, als der noch nicht auf Betriebstemperatur gebrachte Verbrennungsmotor 1.

Diese Überschussleistung der Startanlage kann dazu genutzt werden, das Fahrzeug am Rollen in eine nicht gewünschte Richtung zu hindern und/oder dazu, das Fahrzeug schon während des Starts in Bewegung zu setzen, um den Nachteil der oben beschriebenen Totzeit zu vermeiden.

Die Regelung des Systems erfolgt über die Beschränkung des Anfahrmoments derart, dass Drehungleichförmigkeiten des Verbrennungsmotors bei seinem Start und beim Hochlaufen vom übrigen Antriebsstrang entkoppelt und unvorhersehbare Fahrzeugbeschleunigungen vermieden werden.

Das Kraftfahrzeug wird in der Stillstandsphase über die Kupplung 3 und einen eingelegten Gang gehalten.

Beim dargestellten Ausführungsbeispiel regelt die Regelungsvorrichtung 5 das beim Starten des Verbrennungsmotors 1 von der elektrischen Maschine 2 auf das zumindest eine Fahrzeugantriebsrad übertragene Drehmoment derart, dass sich das Kraftfahrzeug 1 in Bewegung setzt, bevor der Verbrennungsmotor 1 eine Drehzahl erreicht hat, bei der er Leistung abgeben kann. Anders ausgedrückt, überschneiden sich der Hochlauf des Verbrennungsmotors 1 und der Beschleunigungsvorgang des Fahrzeugs, wodurch die Totzeit beim Anfahren beseitigt oder zumindest erheblich reduziert wird. An Steigungen sind in der Regel keine zusätzlichen Eingriffe des Fahrers erforderlich.

Beim Start des Verbrennungsmotors 1 wird die Kupplung 3 vom Kupplungsautomaten 6 soweit betätigt, dass das übertragbare Drehmoment ausreicht, um das Fahrzeug zu halten bzw. leicht zu beschleunigen. Ist die erforderliche Drehzahl des Verbrennungsmotors 1 für eine Leistungsabgabe erreicht, wird die Kupplung 3 weiter geschlossen und das Kraftfahrzeug beschleunigt. In der Ebene oder bei leichten Steigungen reicht der Minimalwert der Wechselmomente des Verbrennungsmotors 1 aus.

Obwohl dies nicht näher dargestellt ist, ist es denkbar, anstelle eines herkömmlichen Starters leistungsstärkere Systeme mit kleinerer Übersetzung zur Kurbelwelle zu verwenden. Derartige leistungsstärkere Systeme würden eine noch bessere Hochlaufunterstützung und damit eine volle Überschneidung des Starts und der Beschleunigung des Fahrzeugs gewährleisten.

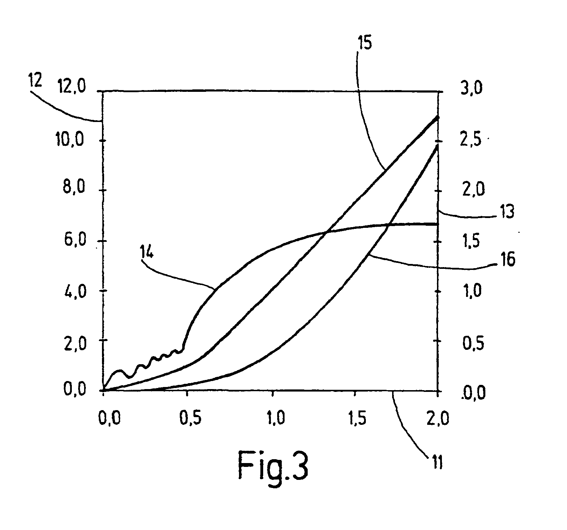

In den Figuren 2 und 3 ist die Fahrzeuggeschwindigkeit in km/h auf der linken vertikalen Achse 12 aufgetragen. Der Fahrzeugweg in m und die Drehzahl der Kurbelwelle 7 in 1000/min sind auf der rechten vertikalen Achse 13 aufgetragen, und die Zeit in sec ist auf der horizontalen Achse 11 aufgetragen. Dabei sind die Kennlinien der Kurbelwellendrehzahlen mit 14, der Fahrzeuggeschwindigkeiten mit 15 und der zurückgelegten Wege mit 16 bezeichnet.

In den Figuren 2 und 3 ist jeweils nur die Anfahrphase dargestellt, in welcher das übertragbare Moment der Kupplung 3 kontinuierlich erhöht wird. Der volle Kraftschluss ist nicht dargestellt.

Figur 2, die einen konventionellen Fahrzeugstart eines Fahrzeugs mit Startergenerator zeigt, ist die anfangs erwähnte Totzeit zu entnehmen, die zwischen dem Beginn des Startvorgangs, das heißt, dem Andrehen der Kurbelwelle, und dem Beginn der Fahrzeugbewegung liegt. Im dargestellten Fall beträgt diese Totzeit ca. 0,7 Sekunden.

Figur 3 zeigt den Startvorgang eines Fahrzeuges, das mit einem erfindungsgemäßen Antriebsstrang ausgestattet ist, wobei ein Sart-Stop-Fahrzeugstart mit Startergenerator und eingelegtem Gang dargestellt ist.

Dadurch, dass ein Teil des durch die elektrische Maschine 2 erzeugten Drehmoments vom Zeitpunkt des Andrehens der Kurbelwelle an auf zumindest ein Fahrzeugantriebsrad übertragen wird, entfällt die Totzeit, was insbesondere bei Fahrzeugen mit Start-Stopp-Automatik einen großen Vorteil darstellt.

## Patentansprüche

1. Antriebsstrang für ein Kraftfahrzeug, miteinem Verbrennungsmotor (1), mit einer elektrischen Maschine (2), die beim Starten des Verbrennungsmotors (1) ein Drehmoment erzeugt, und mit einer Kupplung (3), die zwischen dem Verbrennungsmotor (1) und einem Getriebe (4) angeordnet ist, über das eindurch den Verbrennungsmotor (1) erzeugtes Drehmoment auf zumindest ein Fahrzeugantriebsrad übertragen werden kann, **dadurch gekennzeichnet, daß** Mittel (5,6) vorgesehen sind, die die Kupplung (3) beim Start des Verbrennungsmotors derart betätigen können, dass ein erster Teil des beim Starten des Verbrennungsmotors von der elektrischen Maschine (2) erzeugten Drehmoments auf das zumindest eine Fahrzeugantriebsrad und ein zum Starten des Verbrennungsmotors (1) ausreichender zweiter Teil des von der elektrischen Maschine (2) erzeugten Drehmoments auf den Verbrennungsmotor (1) übertragen wird, wobei
die Mittel eine Steuerungseinrichtung (5) umfassen, und
für die Steuerungseinrichtung (5) temperatur abhängige Kennfelder für das Startmoment und/oder für das vorwiegend vom Kupplungseinrückweg abhängige Kupplungsmoment verwendet werden.

2. Antriebsstrang für ein Kraftfahrzeug, mit einem Verbrennungsmotor (1), mit einer elektrischen Maschine (2), die beim Starten des Verbrennungsmotors (1) ein Drehmoment erzeugt, und mit einer Kupplung (3), die zwischen dem Verbrennungsmotor (1) und einem Getriebe (4) angeordnet ist, über das ein durch den Verbrennungsmotor (1) erzeugtes Drehmoment auf zumindest ein Fahrzeugantriebsrad übertragen werden kann, **dadurch gekennzeichnet, daß** Mittel (5,6) vorgesehen sind, die die Kupplung (3) beim Start des Verbrennungsmotors derart betätigen können, dass ein erster Teil des beim Starten des Verbrennungsmotors von der elektrischen Maschine (2) erzeugten Drehmoments auf das zumindest eine Fahrzeugantriebsrad und ein zum Starten des Verbrennungsmotors (1) ausreichender zweiter Teil des von der elektrischen Maschine (2) erzeugten Drehmoments auf den Verbrennungsmotor (1) übertragen wird, wobei
Sensoren vorgesehen sind, die einen Ausnahmezustand erfassen, in dem sich das Kraftfahrzeug aufgrund von äußeren Kräften ungewollt in Belegung setzen würde, weil das beim Starten der elektrischen Maschine auf das zumindest eine Fahrzeugantriebsrad übertragene Drehmoment zu klein ist, um die ungewollte Bewegung des Kraftfahrzeugs zu verhindern, und
eine Fahrzeugbremse vorgesehen ist, die beim Auftreten des Ausnahmezustandes automatisch betätigt wird.

3. Antriebsstrang nach Anspruch 2, **dadurch gekennzeichnet, dass** die Mittel eine Steuerungseinrichtung (5) umfassen.

4. Antriebsstrang nach Anspruch 1 oder 3, **dadurch gekennzeichnet, dass** für die Steuerungseinrichtung (5) temperatur- und/oder drehzahlabhängige Kennfelder für das Antriebsmoment des Verbrennungsmotors (1) und/oder für das Startmoment und/oder für das vorwiegend vom Kupplungseinrückweg abhängige Kupplungsmoment verwendet werden.

5. Antriebsstrang nach Anspruch 1 oder 4, **dadurch gekennzeichnet, dass** die Kennfelder adaptiv verändert werden.

6. Antriebsstrang nach einem der vorhergehenden Ansprüche, **dadurch gekennzeichnet, dass** die Mittel eine Regelungsvorrichtung (5) umfassen.

7. Antriebsstrang nach einem der vorhergehenden Ansprüche, **dadurch gekennzeichnet, dass** die Regelungsvorrichtung das beim Starten des Verbrennungsmotors (1) von der elektrischen Maschine (2) auf das zumindest eine Fahrzeugantriebsrad übertragene Drehmoment derart regelt, dass Drehungleichförmigkeiten des Verbrennungsmotors (1) beim Start des Verbrennungsmotors (1) von dem zumindest einen Fahrzeugantriebsrad entkoppelt werden.

8. Antriebsstrang nach einem der vorhergehenden Ansprüche, **dadurch gekennzeichnet, dass** die Entkopplung der Drehungleichförmigkeiten zumindest solange erfolgt, bis der Verbrennungsmotor (1) eine Drehzahl erreicht hat, bei der er Leistung abgeben kann.

9. Antriebsstrang nach einem der vorhergehenden Ansprüche, **dadurch gekennzeichnet, dass** die Regelungsvorrichtung (5) das beim Starten des Verbrennungsmotors (1) von der elektrischen Maschine (2) auf das zumindest eine Fahrzeugantriebsrad übertragene Drehmoment derart regelt, dass das Kraftfahrzeug im Stillstand gehalten wird, bis der Verbrennungsmotor (1) eine Drehzahl erreicht hat, bei der er Leistung abgeben kann.

10. Antriebsstrang nach Anspruch 1, **dadurch gekennzeichnet, dass** Sensoren vorgesehen sind, die einen Ausnahmezustand erfassen, in dem sich das Kraftfahrzeug aufgrund von äußeren Kräften ungewollt in Bewegung setzen würde, weil das beim Starten der elektrischen Maschine auf das zumindest eine Fahrzeugantriebsrad übertragene Drehmoment zu klein ist, um die ungewollte Bewegung des Kraftfahrzeugs zu verhindern.

11. Antriebsstrang nach Anspruch 10, **dadurch gekennzeichnet, dass** der von den Sensoren erfaßte Ausnahmezustand dem Fahrer angezeigt wird.

12. Antriebsstrang nach Anspruch 10, **dadurch gekennzeichnet, dass** eine Fahrzeugbremse vorgesehen ist, die beim Auftreten des Ausnahmezustandes automatisch betätigt wird.

13. Antriebsstrang nach einem der vorhergehenden Ansprüche, **dadurch gekennzeichnet, dass** die Fahrzeugbremse automatisch gelöst wird, wenn der Verbrennungsmotor (1) eine Drehzahl erreicht hat, bei der er Leistung abgeben kann.

14. Antriebsstrang nach einem der vorhergehenden Ansprüche, **dadurch gekennzeichnet, dass** die Regelungsvorrichtung (5) das beim Starten des Verbrennungsmotors (1) von der elektrischen Maschine (2) auf das zumindest eine Fahrzeugantriebsrad übertragene Drehmoment derart regelt, dass sich das Kraftfahrzeug in Bewegung setzt, bevor der Verbrennungsmotor (1) eine Drehzahl erreicht hat, bei der er Leistung abgeben kann.

15. Antriebsstrang nach einem der vorhergehenden Ansprüche, **dadurch gekennzeichnet, dass** die Mittel einen Kupplungsautomaten (6) umfassen, der die Kupplung (3) betätigt.

16. Antriebsstrang nach einem der vorhergehenden Ansprüche, **dadurch gekennzeichnet, dass** die Regelungsvorrichtung (5) den Kupplungsautomaten (6) ansteuert.

17. Antriebsstrang nach einem der vorhergehenden Ansprüche, **dadurch gekennzeichnet, dass** eine Start-Stop-Automatik vorgesehen ist, die den Verbrennungsmotor bei einem Stillstand des Kraftfahrzeugs abstellen und zur Weiterfahrt wieder starken kann.

18. Antriebsstrang nach einem der vorhergehenden Ansprüche, **dadurch gekennzeichnet, dass** nur beim Start-Stop-Betrieb des Kraftfahrzeugs, nicht jedoch beim bezogen auf die Fahrt ersten Startvorgang, der erste Teil des beim Starten von der elektrischen Maschine (2) erzeugten Drehmoments auf das zumindest eine Antriebsrad übertragen wird.

19. Antriebsstrang nach einem der vorhergehenden Ansprüche, **dadurch gekennzeichnet, dass** die elektrische Maschine (2) ein Starter ist

20. Antriebsstrang nach einem der vorhergehenden Ansprüche, **dadurch gekennzeichnet, dass** die elektrische Maschine (2) eine Startergenerator ist.

## Claims

1. Drive train for a motor vehicle, having an internal combustion engine (1), having an electric machine (2) which generates a torque when the internal combustion engine (1) starts, and having a clutch (3) which is arranged between the internal combustion engine (1) and a gearbox (4), by means of which gear box (4) a torque which is generated by means of the internal combustion engine (1) can be transmitted to at least one vehicle drive wheel, **characterized in that** means (5, 6) are provided which can activate the clutch (3) when the internal combustion engine starts in such a way that a first part of the torque which is generated by the electric machine (2) when the internal combustion engine starts is transmitted to the at least one vehicle drive wheel, and a second part of the torque which is generated by the electric machine (2) and which is sufficient to start the internal combustion engine (1) is transmitted to the internal combustion engine (1), wherein the means comprise a control device (5), and temperature-dependent characteristic diagrams for the starting torque and/or for the coupling torque which is mainly dependent on the engagement travel of the clutch are used for the control device (5).

2. Drive train for a motor vehicle, having an internal combustion engine (1), having an electric machine (2) which generates a torque when the internal combustion engine (1) starts, and having a clutch (3) which is arranged between the internal combustion engine (1) and a gearbox (4), by means of which gear box (4) a torque which is generated by means of the internal combustion engine (1) can be transmitted to at least one vehicle drive wheel, **characterized in that** means (5, 6) are provided which can activate the clutch (3) when the internal combustion engine starts in such a way that a first part of the torque which is generated by the electric machine (2) when the internal combustion engine starts is transmitted to the at least one vehicle drive wheel, and a second part of the torque which is generated by the electric machine (2) and which is sufficient to start the internal combustion engine (1) is transmitted to the internal combustion engine (1), wherein sensors are provided which sense an exceptional state in which the motor vehicle would undesirably begin to move owing to external forces because the torque which is transmitted to the at least one vehicle drive wheel when the electric machine starts is too small to prevent the undesirable movement of the motor vehicle, and a vehicle brake is provided which is actuated automatically when the exceptional state occurs.

3. Drive train according to Claim 2, **characterized in that** the means comprise a control device (5).

4. Drive train according to Claim 1 or 3, **characterized in that** temperature-dependent and/or rotational-speed-dependent characteristic diagrams for the drive torque of the internal combustion engine (1) and/or for the starting torque and/or for the coupling torque which is mainly dependent on the engagement travel of the clutch are used for the control device (5).

5. Drive train according to Claim 1 or 4, **characterized in that** the characteristic diagrams are changed adaptively.

6. Drive train according to one of the preceding claims, **characterized in that** the means comprise a closed-loop control device (5).

7. Drive train according to one of the preceding claims, **characterized in that** the closed-loop control device controls the torque which is transmitted to the at least one vehicle drive wheel by the electric machine (2) when the internal combustion engine (1) starts in such a way that rotation irregularities of the internal combustion engine (1) are decoupled from the at least one vehicle drive wheel when the internal combustion engine (1) starts.

8. Drive train according to one of the preceding claims, **characterized in that** the rotational irregularities are decoupled at least until the internal combustion engine (1) has reached a rotational speed at which it can output power.

9. Drive train according to one of the preceding claims, **characterized in that** the closed-loop control device (5) controls the torque which is transmitted to the at least one vehicle drive wheel by the electric machine (2) when the internal combustion engine (1) starts in such a way that the motor vehicle is kept in the stationary state until the internal combustion engine (1) has reached a rotational speed at which it can output power.

10. Drive train according to Claim 1, **characterized in that** sensors are provided which sense an exceptional state in which the motor vehicle would undesirably begin to move owing to external forces because the torque which is transmitted to the at least one vehicle drive wheel when the electric machine starts is too small to prevent the undesirable movement of the motor vehicle.

11. Drive train according to Claim 10, **characterized in that** the exceptional state which is sensed by the sensors is indicated to the driver.

12. Drive train according to Claim 10, **characterized in that** a vehicle brake is provided which is actuated automatically when the exceptional state occurs.

13. Drive train according to one of the preceding claims, **characterized in that** the vehicle brake is released automatically when the internal combustion engine (1) has reached a rotational speed at which it can output power.

14. Drive train according to one of the preceding claims, **characterized in that** the closed-loop control device (5) controls the torque which is transmitted to the at least one vehicle drive wheel by the electric machine (2) when the internal combustion engine (1) starts in such a way that the motor vehicle begins to move before the internal combustion engine (1) has reached a rotational speed at which it can output power.

15. Drive train according to one of the preceding claims, **characterized in that** the means comprise an automatic clutch actuator (6) which activates the clutch (3).

16. Drive train according to one of the preceding claims, **characterized in that** the closed-loop control device (5) actuates the automatic clutch actuator (6).

17. Drive train according to one of the preceding claims, **characterized in that** a start/stop automatic actuator is provided which can shut down the internal combustion engine when the motor vehicle is in a stationary state and can start it up again for further travel.

18. Drive train according to one of the preceding claims, **characterized in that** the first part of the torque which is generated by the electric machine (2) when starting occurs is transmitted to the at least one drive wheel only in the start/stop operating mode of the motor vehicle, but not during the first starting process for the journey.

19. Drive train according to one of the preceding claims, **characterized in that** the electric machine (2) is a starter.

20. Drive train according to one of the preceding claims, **characterized in that** the electric machine (2) is a starter-generator.

## Revendications

1. Transmission pour véhicule automobile, comprenant un moteur à combustion interne (1), avec un moteur électrique (2) qui produit un couple au démarrage du moteur à combustion interne (1), et comprenant un embrayage (3) qui est disposé entre le moteur à combustion interne (1) et une boîte de vitesses (4), par le biais de laquelle un couple produit par le moteur à combustion interne (1) peut être transmis à au moins une roue motrice du véhicule, **caractérisée en ce que** des moyens (5, 6) sont prévus, lesquels peuvent actionner l'embrayage (3) au démarrage du moteur à combustion interne de telle sorte qu'une première partie du couple produit lors du démarrage du moteur à combustion interne par le moteur électrique (2) soit transmise à l'au moins une roue motrice du véhicule et qu'une deuxième partie du copule produit par le moteur électrique (2) suffisante pour démarrer le moteur à combustion interne (1) soit transmise au moteur à combustion interne (1),
les moyens comprenant un dispositif de commande (5), et des champs caractéristiques, dépendant de la température, pour le couple de démarrage et/ou pour le couple d'embrayage dépendant essentiellement de la course d'embrayage de l'embrayage, étant utilisés pour le dispositif de commande (5).

2. Transmission pour véhicule automobile, comprenant un moteur à combustion interne (1), avec un moteur électrique (2) qui produit un couple au démarrage du moteur à combustion interne (1), et comprenant un embrayage (3) qui est disposé entre le moteur à combustion interne (1) et une boîte de vitesses (4), par le biais de laquelle un couple produit par le moteur à combustion interne (1) peut être transmis à au moins une roue motrice du véhicule, **caractérisée en ce que** des moyens (5, 6) sont prévus, lesquels peuvent actionner l'embrayage (3) au démarrage du moteur à combustion interne de telle sorte qu'une première partie du couple produit lors du démarrage du moteur à combustion interne par le moteur électrique (2) soit transmise à l'au moins une roue motrice du véhicule et qu'une deuxième partie du couple produit par le moteur électrique (2) suffisante pour démarrer le moteur à combustion interne (1) soit transmise au moteur à combustion interne (1), des capteurs étant prévus, lesquels détectent un état d'exception dans lequel le véhicule automobile se mettrait en route sous l'effet de forces extérieures de manière indésirable, parce que le couple transmis au démarrage du moteur électrique à l'au moins une roue motrice du véhicule est trop petit pour empêcher le mouvement indésirable du véhicule automobile, et un frein de véhicule étant prévu, lequel est automatiquement actionné à l'apparition de cet état d'exception.

3. Transmission selon la revendication 2, **caractérisée en ce que** les moyens comprennent un dispositif de commande (5).

4. Transmission selon la revendication 1 ou 3, **caractérisée en ce que** l'on utilise pour le dispositif de commande (5) des champs caractéristiques dépendant de la température et/ou du régime pour le couple d'entraînement du moteur à combustion interne (1) et/ou pour le couple de démarrage et/ou pour le couple d'embrayage dépendant essentiellement de la course d'embrayage de l'embrayage.

5. Transmission selon la revendication 1 ou 4, **caractérisée en ce que** les champs caractéristiques sont modifiés de manière adaptative.

6. Transmission selon l'une quelconque des revendications précédentes, **caractérisée en ce que** les moyens comprennent un dispositif de régulation (5).

7. Transmission selon l'une quelconque des revendications précédentes, **caractérisée en ce que** le dispositif de régulation régule le couple transmis au démarrage du moteur à combustion interne (1) par le moteur électrique (2) à l'au moins une roue motrice du véhicule de telle sorte que les irrégularités de rotation du moteur à combustion interne (1) soient désaccouplées de l'au moins une roue motrice du véhicule au démarrage du moteur à combustion interne (1).

8. Transmission selon l'une quelconque des revendications précédentes, **caractérisée en ce que** le désaccouplement des irrégularités de rotation a lieu au moins jusqu'à ce que le moteur à combustion interne (1) ait atteint un régime auquel il peut fournir de la puissance.

9. Transmission selon l'une quelconque des revendications précédentes, **caractérisée en ce que** le dispositif de régulation (5) régule le couple transmis au démarrage du moteur à combustion interne (1) par le moteur électrique (2) à l'au moins une roue motrice du véhicule de telle sorte que le véhicule automobile soit maintenu à l'arrêt jusqu'à ce que le moteur à combustion interne (1) ait atteint un régime auquel il peut fournir de la puissance.

10. Transmission selon la revendication 1, **caractérisée en ce que** des capteurs sont prévus pour détecter un état d'exception, dans lequel le véhicule automobile se mettrait en route sous l'effet de forces extérieures de manière indésirable, parce que le couple transmis au démarrage du moteur électrique à l'au moins une roue motrice du véhicule est trop petit pour empêcher le mouvement indésirable du véhicule automobile.

11. Transmission selon la revendication 10, **caractérisée en ce que** l'état d'exception détecté par les capteurs est indiqué au conducteur.

12. Transmission selon la revendication 10, **caractérisée en ce que** l'on prévoit un frein de véhicule qui est automatiquement actionné à l'apparition de l'état d'exception.

13. Transmission selon l'une quelconque des revendications précédentes, **caractérisée en ce que** le frein du véhicule est automatiquement relâché lorsque le moteur à combustion interne (1) a atteint un régime auquel il peut fournir de la puissance.

14. Transmission selon l'une quelconque des revendications précédentes, **caractérisée en ce que** le dispositif de régulation (5) régule le couple transmis au démarrage du moteur à combustion interne (1) par le moteur électrique (2) à l'au moins une roue motrice du véhicule de telle sorte que le véhicule automobile se mette en mouvement avant que le moteur à combustion interne (1) n'ait atteint un régime auquel il peut fournir de la puissance.

15. Transmission selon l'une quelconque des revendications précédentes, **caractérisée en ce que** les moyens comprennent un robot d'embrayage (6) qui actionne l'embrayage (3).

16. Transmission selon l'une quelconque des revendications précédentes, **caractérisée en ce que** le dispositif de régulation (5) commande le robot d'embrayage (6).

17. Transmission selon l'une quelconque des revendications précédentes, **caractérisée en ce qu'**un système automatique de démarrage-arrêt est prévu, lequel peut arrêter le moteur à combustion interne dans le cas d'une immobilisation du véhicule automobile, et peut le remettre en route pour repartir.

18. Transmission selon l'une quelconque des revendications précédentes, **caractérisée en ce que** seulement dans le cas d'un mode de fonctionnement marche-arrêt du véhicule automobile, mais pas lors de la première opération de démarrage en termes de conduite, la première partie du couple produit au démarrage du moteur électrique (2) est transmise à l'au moins une roue motrice.

19. Transmission selon l'une quelconque des revendications précédentes, **caractérisée en ce que** le moteur électrique (2) est un démarreur.

20. Transmission selon l'une quelconque des revendications précédentes, **caractérisée en ce que** le moteur électrique (2) est un démarreur-générateur.
